# Europäisches Patentamt

# European Patent Office

# Office européen des brevets

(19)

(11) Veröffentlichungsnummer: **0 168 629**
**B1**

(12) **EUROPÄISCHE PATENTSCHRIFT**

(45) Veröffentlichungstag der Patentschrift:
30.08.89

(51) Int. Cl.⁴: **B 29 C 39/44**, B 29 C 39/06

(21) Anmeldenummer: **85107180.3**

(22) Anmeldetag: **11.06.85**

(54) **Verfahren und Vorrichtung zur Steuerung des elektromotorischen Antriebs einer Anlage zur Herstellung von Formteilen aus Mehrkomponenten-Kunststoffen.**

(30) Priorität: 16.06.84 DE 3422429

(43) Veröffentlichungstag der Anmeldung:
22.01.86 Patentblatt 86/04

(45) Bekanntmachung des Hinweises auf die Patenterteilung: 30.08.89 Patentblatt 89/35

(84) Benannte Vertragsstaaten:
AT BE CH DE FR GB IT LI NL

(56) Entgegenhaltungen:
EP-A- 0 060 536
DE-A- 2 207 070
DE-B- 1 151 654
US-A- 3 778 693
US-A- 3 889 169
US-A- 4 008 829
US-A- 4 082 491

(73) Patentinhaber: ELASTOGRAN POLYURETHANE
GMBH
Landwehrweg
D-2844 Lemförde (DE)

(72) Erfinder: Rehmann, Günter
D-8197 Schoenrain 4 (DE)
Erfinder: Koentges, Gerhard
Brunnenstrasse 4
D-4500 Osnabrueck (DE)
Erfinder: Mackert, Werner
Sohnckestrasse 9
D-8000 München 71 (DE)

(74) Vertreter: Rämisch, Friedrich, Dr. et al
BASF Aktiengesellschaft Carl-Bosch-Strasse 38
D-6700 Ludwigshafen (DE)

**Beschreibung**

Die Erfindung bezieht sich auf ein Verfahren nach dem Oberbegriff des Patentanspruchs 1 sowie auf eine Vorrichtung nach dem Oberbegriff des Patentanspruchs 2. Ein derartiges Verfahren und eine derartige Vorrichtung sind in der Praxis allgemein üblich.

Bei der Herstellung von Formteilen aus Mehrkomponenten-Kunststoffen ist es bekannt, Gießformen auf Ovalbändern oder Rundtischen taktweise fortzubewegen. Das Reaktionsgemisch wird dabei intermittierend in den Hohlraum der Gießformen eingefüllt. Da der in die Formen eingefüllte Kunststoff nicht unerhebliche Aushärtungszeiten aufweist, ist es erforderlich, wenn die Ovalbänder oder Rundtische insgesamt kontinuierlich arbeiten sollen, eine große Anzahl von Gießformen auf diesen anzuordnen, was aber nur auf Anlagen mit entsprechend großem Umfang möglich ist.

Für die intermittierende Bewegung der Förderbänder oder Karussells bei Rundtischen werden üblicherweise regelbare Antriebe, insbesondere regelbare Elektromotoren, verwendet, die über Endschalter am Umfang der Förderbänder bzw. Karussells gesteuert werden. Pro Gießform ist ein justierbarer Schaltnocken vorhanden, der jeweils nacheinander zwei Endschalter betätigt, von denen der in Bewegungsrichtung jeweils erste Endschalter die Geschwindigkeit reduziert und der zweite Endschalter die Bewegung des Förderbandes bzw. Karussells in einer gewünschten Position der Gießform unterbricht. Die von den Endschaltern abgegebenen Signale werden in einem Geschwindigkeitsregler mit Soll-Wert-Vorgaben zur Steuerung des elektromotorischen Antriebs verglichen. Weitere Schaltelemente sind den feststehenden Einrichtungen zum Füllen, Entformen und Reinigen der Gießformen zugeordnet, über die die Auslösung der für den Verfahrensablauf notwendigen Funktionen erfolgt.

Die Einstellung der Kriechgeschwindigkeit, d. h. der reduzierten Geschwindigkeit des Förderbandes oder Karussells sowie das Positionieren der Gießformen erfordern erhebliche Erfahrungen. Schwierigkeiten ergeben sich vor allem aus der großen Massenträgheit der bewegten Teile. Diese Schwierigkeiten treten insbesondere bei einem Wechsel der Gießformen auf, wenn beispielsweise auf Gießformen unterschiedlicher Massen oder unterschiedlicher geometrischer Formen umgerüstet wird, da dann die Bewegungstakte durch Nachjustierung der Schaltnocken und/oder Endschalter neu festgelegt werden müssen. Hierbei werden an das Bedienungspersonal erhebliche Anforderungen gestellt, die eine längere Erfahrung sowie eine Vertrautheit mit diesen verwickelten Vorgängen voraussetzen. Darüber hinaus sind diese Arbeiten äußerst zeitaufwendig. Auch die Genauigkeit der Positionierung der Gießformen ist in vielen Fällen unzureichend, so daß an den gegenüber dem Förderband oder Karussell feststehenden Einrichtungen Möglichkeiten für eine Korrektur bzw. Feineinstellung vorgesehen sein müssen.

Es war daher Aufgabe der vorliegenden Erfindung, die Bewegungstakte eines mit Gießformen bestückten Förderbandes oder Karussells so zu steuern, daß sie ohne Nacheinstellungen mit sehr hoher Genauigkeit durchgeführt und daß auch unterschiedliche Vorschubweiten bzw. Drehwinkel eingestellt werden können.

Zur Lösung dieser Aufgabe werden die Maßnahmen nach dem Kennzeichen des Anspruchs 1 vorgeschlagen.

Erfindungsgemäß wird neben dem Soll-Ist-Wert-Vergleich der Geschwindigkeit auch ein Soll-Ist-Wert-Vergleich der Bewegungstakte, d. h. der jeweiligen Vorschubweiten des Förderbandes bzw. der jeweiligen Drehbewegungen des Karussells, durchgeführt. Als Vergleichsgröße dient in beiden Fällen eine über den elektromotorischen Antrieb erzeugte Signalspannung. Diese wird zum einen mit einer elektrischen Spannung, deren Verlauf ein Geschwindigkeitsprofil zugeordnet ist, verglichen und zum anderen in elektrische Impulse umgesetzt, die in ihrer zeitlichen Folge als Funktion der Bewegungstakte des Förderbandes bzw. Karussells aufsummiert und mit einer vorgegebenen, veränderbaren Masterfunktion verglichen werden. Dabei wird der Umfang des Förderbandes oder Karussells entsprechend der Anzahl der Impulse pro Umdrehung in Inkremente aufgelöst. Jeder Bewegungstakt ist durch eine bestimmte Impulszahl festgelegt, so daß jeder beliebigen Position der Gießformen die für den Ablauf der Formteilherstellung notwendige Funktion frei zugeordnet werden kann, wobei in diese Festlegung der Bewegungstakte auch die gegenüber dem Förderband bzw. Karussell feststehenden Einrichtungen zum Füllen, Entformen und Reinigen der Gießformen einbezogen sind. Mit der inkrementalen Auflösung des Umfangs des Förderbandes oder Karussells ist eine besonders genaue, lastunabhängige Positionierung der Gießformen möglich. Die Genauigkeit der Positionierung wird auch dann nicht beeinträchtigt, wenn das Förderband oder Karussell mit verschieden großen Gießformen bestückt ist. unterschiedliche Gießformen erfordern lediglich eine Anpassung der jeweiligen Bewegungstakte, indem die Anzahl der Impulse pro Bewegungstakt entsprechend verändert wird.

Die Vorrichtung zur Durchführung des Verfahrens besteht aus einem mit einem regelbaren Elektromotor verbundenen Tachogenerator, dessen Signalspannung auf den Ist-Wert-Eingang eines Geschwindigkeitsreglers geführt ist, wobei am Soll-Wert-Eingang des Geschwindigkeitsreglers ein der Position der Gießformen entsprechendes Signal anliegt und zeichnet sich dadurch aus, daß der Tachogenerator mit einem Impulsgenerator gekoppelt ist, dessen Impulse mittels einer Komparatorschaltung mit einer von einer Anlagensteuerung erzeugten, vorprogrammierten Impulszahl zur Bereitstellung des am Soll-Wert-Eingang des Geschwindigkeitsreglers anliegenden Signals abgleichbar sind.

Die erfindungsgemäße Vorrichtung arbeitet mit hoher Genauigkeit und ist aus einfachen, handelsüblichen Teilen aufgebaut. Für die Steuerung der intermittierenden Bewegung des Förderbandes oder Karussells sind keine Endschalter und keine Schaltnocken mehr erforderlich. Fehlsteuerungen sind ausgeschlossen, da der Impulsgenerator unmittelbar durch den von dem Elektromotor angetriebenen Tachogenerator betätigt wird.

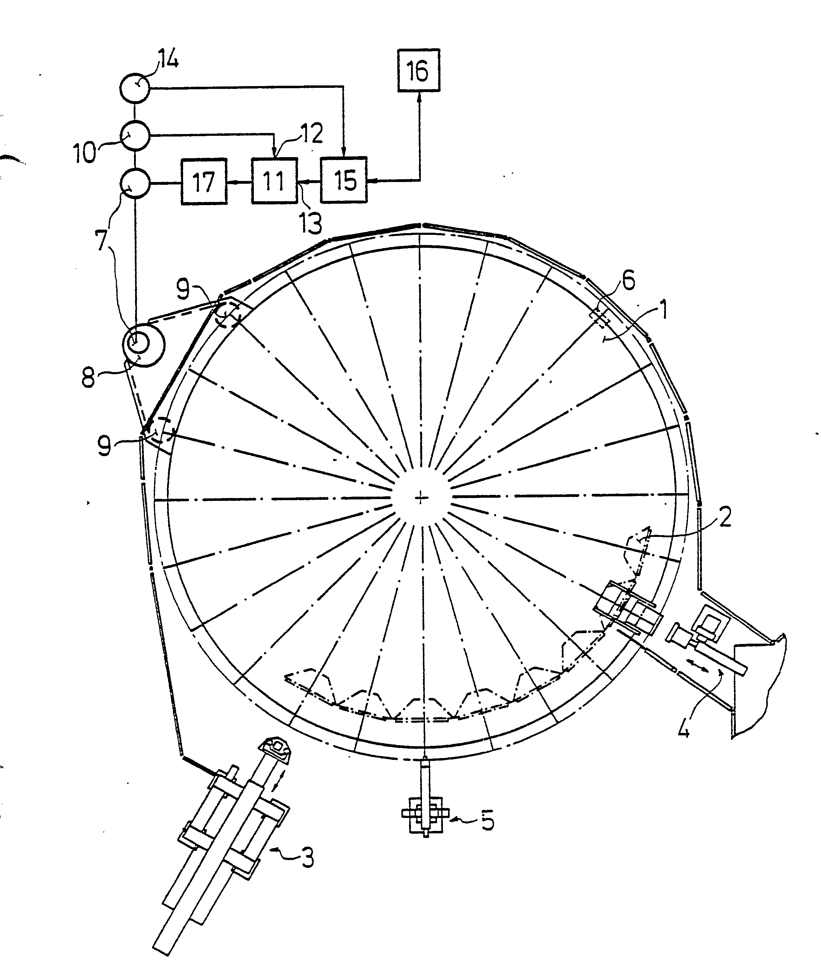

Die Erfindung wird nachfolgend anhand der Zeichnung am Beispiel eines Rundtisches näher erläutert.

In der Zeichnung bedeutet 1 das drehbare Karussell, auf dem mehrere Gießformen 2 befestigt sind. Mit Abstand zum Karussell sind feststehende Einrichtungen zum Füllen 3, Entformen 4 und Reinigen (nicht dargestellt) der Gießformen vorgesehen. Eine Trennmittelauftragseinrichtung ist mit 5 bezeichnet. Das Karussell 1 wird über einen elektromotorischen Antrieb in Drehbewegung versetzt. Der Antrieb besteht aus einem Elektromotor 7, welcher ein Kettenrad 8 antreibt. Über das Kettenrad 8 sowie zwei Umlenkrädern 9 ist eine Antriebskette geführt, die zwischen den umlenkrädern mit einem am Karussell angebrachten Zahnkranz in Eingriff steht.

Das Karussell 1 wird intermittierend bewegt, so daß jede Gießform 2 in einer exakt definierten Position zu den Einrichtungen 3, 4 und 5 angehalten werden kann. Mit anderen Worten, die Bewegung des Karussells erfolgt während einer Umdrehung in der Anzahl der Gießformen entsprechenden Schritten, d. h. Bewegungstakten. Hierfür ist der Elektromotor 7 mit einer entsprechenden Steuerung versehen. Diese besteht aus einem mit dem Elektromotor verbundenen und von diesem antreibbaren Tachogenerator 10. Der Tachogenerator erzeugt eine entsprechend der Drehbewegung des Elektromotors veränderbare Signalspannung, die zum einen auf den Ist-Wert-Eingang 12 eines Geschwindigkeitsreglers 11 geführt ist und zum anderen, in Abhängigkeit ihres zeitlichen Verlaufs einen Impulsgenerator 14 steuert. Jedem Bewegungstakt des Karussells ist eine bestimmte, frei wählbare Impulszahl zugeordnet. Die bei 14 ausgelösten Impulse werden in ihrer Folge aufsummiert und mit einer in einer Anlagensteuerung 16 vorprogrammierten Impulszahl mittels einer Komparatorschaltung 15 verglichen. Als Komparatorschaltung 15 kann beispielsweise eine Schaltung Verwendung finden, die in der Lage ist, eingehende Impulse eines Impulsgenerators zu summieren und diese Summe mit einem von der Anlagensteuerung 16 vorgegebenen Wert zu vergleichen und bei Gleichstand ein Signal abzugeben. Das aus diesem Vergleich sich ergebende Signal ist auf den Soll-Wert-Eingang 13 des Geschwindigkeitsreglers 11, der mit einer Motorsteuerung 17 für den Elektromotor 7 verbunden ist, geführt. Über den Geschwindigkeitsregler und die Motorsteuerung erfolgt somit in Abhängigkeit des Soll-Ist-Wert-Vergleichs der Impulse die Steuerung des Karussells in vorbestimmten Takten. Aufgrund der großen Massenträgheit des Systems kann dabei die Karussellbewegungen auch in zwei Geschwindigkeitsstufen, nämlich Fördergeschwindigkeit und Kriechgeschwindigkeit unmittelbar vor Beendigung eines Bewegungstaktes durchgeführt werden. Die jeweilige Umschaltung auf Kriechgeschwindigkeit ist durch eine frei wählbare Impulszahl bestimmt und ergibt sich ebenfalls aus dem Vergleich mit der in der Anlagensteuerung 16 vorgegebenen Masterfunktion.

Die Komparatorschaltung 15 kann auch aus einem Prozessor, einem digitalen Lageregler, einem Impulszähler und einem Digital-Analog-Wandler bestehen. In diesem Fall wird aus vorgegebener Wegstrecke und zugehörigriger Geschwindigkeit, abhängig von Beschleunigungs- und Verzögerungswerten, die über die Anlagensteuerung 16 festgelegt sind, der Verfahrensweg pro Zeiteinheit berechnet und einem nachgeschalteten Lageregler als Sollwert vorgegeben. Im Lageregler wird dieser Sollwert mit dem jeweiligen Positionsistwert, der im Impulszähler steht, verglichen. Am Ausgang des Lagereglers steht dann ein digitaler Wert, der nach Umwandlung über den Digital-Analog--Wandler, dem nachgeschalteten Geschwindigkeitsregler 11 als analoger Sollwert bei 13 aufgeschaltet wird.

Mit der erfindungsgemäßen Steuerung läßt sich eine besonders genaue Positionierung der Gießformen erreichen. Die Abweichungen betragen ±1 Impuls. Um zu vermeiden, daß sich diese Abweichungen aufaddieren, wird der Impulsgenerator 14 nach jeder Umdrehung des Karussells mittels eines Referenzpunktes 6 wieder in den Nullzustand geschaltet.

## Patentansprüche

1. Verfahren zur Steuerung des elektromotorischen Antriebs für die intermittierende Bewegung eines mit Gießformen (2) bestückten Förderbandes oder Karussells (1) in einer Anlage zur Herstellung von Formteilen aus Mehrkomponenten-Kunststoffen, bei dem ein Soll-Ist-Wert-Vergleich der Geschwindigkeit des Förderbandes bzw. Karussells (1) in Abhängigkeit des Abstandes der Gießformen (2) von feststehenden Einrichtungen zum Füllen (3), Entformen (4) und dergleichen der Gießformen (2) zur Abgabe von Steuersignalen für den Elektromotor (7) erfolgt, wobei der Ist-Wert über eine entsprechend der Drehbewegung des Elektromotors erzeugte Signalspannung bestimmt wird, dadurch gekennzeichnet, daß die Signalspannung zusätzlich und parallel zur Regelung der Geschwindigkeit mittels eines Impulsgenerators (14) in elektrische Impulse umgesetzt wird, die in ihrer zeitlichen Folge als Funktion der Bewegungstakte des Förderbandes bzw. Karussells (1) aufsummiert und mit einer vorgegebenen, veränderbaren Masterfunktion verglichen werden.

2. Vorrichtung zur Steuerung des elektromotorischen Antriebs für die intermittierende Bewegung eines mit Gießformen bestückten Förderbandes oder Karussells in einer Anlage zur Herstellung von Formteilen aus Mehrkomponenten-Kunststoffen, bestehend aus einem Tachogenerator (10) welcher mit einem regelbaren, das Förderband beziehungsweise das Karussell (1) antreibenden Elektromotor (7) verbunden ist, wobei die Signalspannung des Tachogenerators (10) auf den Ist-Wert-Eingang (12) eines Geschwindigkeitsreglers (11) geführt ist, und am Soll-Wert-Eingang (13) des Geschwindigkeitsreglers (11) ein der Position der Gießformen (2) entsprechendes Signal anliegt, dadurch gekennzeichnet, daß der Tachogenerator (10) mit einem Impulsgenerator (14) gekoppelt ist, dessen Impulse mittels einer Komparatorschaltung (15) mit einer von einer Anlagensteuerung (16) erzeugten, vorprogrammierten Impulszahl zur Bereitstellung des am Soll-Wert-Eingang (13) des Geschwindigkeitsreglers (11) anliegenden Signals abgleichbar sind.

## Claims

1. A process for controlling the electric motor drive for the intermittent movement of a conveyor belt or carousel (1), fitted with molds (2), in a unit for the manufacture of moldings from multi-component plastics, in which an intended/actual value comparison of the speed of the conveyor belt or carousel (1) is made as a function of the distance of the molds (2) from fixed devices for filling (3), demolding (4) and similar operations on the molds (2), so as to produce control signals for the electric motor (7), the actual value being determined via a signal voltage generated in accordance with the rotary movement of the electric motor, in which process the signal voltage is additionally, and in parallel to the speed regulation, converted, by means of a pulse generator (14), to electric pulses which are summed in their time sequence as a function of the movement steps of the conveyor belt or carousel (1) and are compared with a predetermined, variable master function.

2. An apparatus for controlling the electric motor drive for the intermittent movement of a conveyor belt or carousel, fitted with molds, in a unit for the manufacture of moldings from multi-component plastics, the apparatus consisting of a tachogenerator (10) which is connected to a controllable electric motor (7) which drives the conveyor belt or carousel (1), the signal voltage of the tachogenerator (10) being fed to the actual value input (12) of a speed controller (11) and a signal corresponding to the position of the molds (2) being applied to the intended value imput (13) of the speed controller (11), in which apparatus the tachogenerator (10) is coupled to a pulse generator (14), the pulses of which can be adjusted by means of a comparator circuit (15) with a preprogrammed pulse number, generated by a control system (16) for the unit, so as to provide the signal applied to the intended value input (13) of the speed controller (11).

## Revendications

1. Procédé de commande du mécanisme électromoteur pour le déplacement intermittent d'une bande transporteuse ou carrousel (1), équipé de moules de coulée (2), dans une installation de fabrication de pièces moulées en matières plastiques multicomposantes, dans lequel s'opère, pour fournir des signaux de commande à l'électromoteur (7), une comparaison des valeurs de consigne et effective de la vitesse de la bande transporteuse ou carrousel (1) en fonction de l'écartement des moules de coulée (2) par rapport à des dispositifs fixes de remplissage (3) de démoulage (4) et similaires des moules de coulée (2), la valeur effective étant déterminée sur une tension de signal produite selon le mouvement de rotation de l'électromoteur, caractérisé par le fait que la tension de signal, additionnellement et parallèlement à la régulation de la vitesse, est transformée, au moyen d'un générateur d'impulsions (I4), en impulsions électriques qui, dans leur succession chronologique, sont totalisées comme fonction de la cadence de déplacement de la bande transporteuse, ou carrousel (1) et comparées à une fonction-maître réglable, préréglée.

2. Appareil de commande du mécanisme électromoteur pour le déplacement intermittent d'une bande transporteuse, ou carrousel (1), équipé de moules de coulée (2), dans une installation de fabrication de pièces moulées en matières plastiques multicomposantes, constitué d'un générateur tachymétrique (10) qui est relié à un électromoteur (7) réglable entraînant la bande transporteuse ou le carrousel (1) la tension de signal du générateur tachymétrique (10) étant amenée à l'entrée de valeur effective (12) d'un régulateur de vitesse (11) et un signal, correspondant à la position des moules de coulée (2), étant appliqué à l'entrée valeur de consigne (13) du régulateur de vitesse (11), caractérisé par le fait que le générateur tachymétrique (10) est accouplé à un générateur d'impulsions (14) dont les impulsions sont, pour disposer du signal applique à l'entrée de valeur de consigne (13) des régulateurs de vitesse (11), alignées, au moyen d'un circuit comparateur (15), sur un nombre d'impulsions préprogrammé produit par une commande d'installation (16).